# FASCICULE DE BREVET EUROPEEN

(11) **EP 2 571 149 B1**
(45) Date de publication et mention de la délivrance du brevet: **04.11.2020**
(21) Numéro de dépôt: 12306014.7
(22) Date de dépôt: 21.08.2012
(51) Int. Cl.: H02M 1/12, H02M 1/44

(54) **Procédé et ensemble circuit pour réduire le courant de mode commun**
Verfahren und Schaltungsanordnung zur Reduzierung des Gleichtaktstroms
Method and circuit arrangement for reducing common mode current

(30) Priorité: 16.09.2011 FR 1158279
(43) Date de publication de la demande: 20.03.2013
(73) Titulaire: Valeo Siemens eAutomotive France SAS, 95800 Cergy (FR)
(72) Inventeur: Sardat, Pierre, 93340 LE RAINCY (FR)
(74) Mandataire: Argyma

(56) Documents cités:
- EP-A2- 0 986 165
- WO-A2-02/37908
- US-A1- 2004 004 514
- US-A1- 2009 121 805
- US-B2- 6 690 230
- US-B2- 6 819 076
- ANIRUDH ACHARYA B ET AL: "Common mode DC bus filter for Active Front-End converter", POWER ELECTRONICS, DRIVES AND ENERGY SYSTEMS (PEDES)&2010 POWER INDIA, 2010 JOINT INTERNATIONAL CONFERENCE ON, IEEE, 20 décembre 2010 (2010-12-20), pages 1-6, XP031913986, DOI: 10.1109/PEDES.2010.5712470 ISBN: 978-1-4244-7782-1

## Description

La présente invention a pour objet la réduction du courant de mode commun circulant entre la masse interne d'un circuit électrique et la terre, ledit circuit étant alimenté par un réseau électrique. Le réseau électrique est notamment, mais non exclusivement un réseau électrique dans lequel le neutre est relié directement à la terre.

Le réseau électrique délivre une tension alternative, polyphasée ou non, et cette tension est redressée pour alimenter une unité de stockage d'énergie du circuit électrique telle qu'une batterie.

Le problème que l'invention vise à résoudre va être explicité en se référant à l'exemple non limitatif suivant. Le circuit électrique est par exemple embarqué dans un véhicule et peut comprendre un système de propulsion électrique du véhicule. Le véhicule comprend encore un châssis.

Lorsque l'unité de stockage est rechargée par le réseau électrique, le châssis est relié à la terre. Du fait de la présence de composants parasites ou non entre le circuit électrique et le châssis, un courant de mode commun peut circuler du circuit vers le châssis et se reboucler via la terre dans le réseau électrique.

Un tel courant de mode commun est dangereux pour un utilisateur qui reposerait par ses pieds sur la terre et qui s'appuierait sur le châssis du véhicule.

Aussi, des normes existent pour limiter la valeur du courant de mode commun admissible entre la partie du circuit électrique en aval du redresseur et le châssis. Les normes européennes limitent ainsi à 3,5 mA la valeur maximale du courant de mode commun à une fréquence de 50 Hz.

Pour respecter ces normes, il est connu de prévoir un transformateur d'isolement entre la partie du circuit en aval du redresseur et le châssis. Un tel transformateur peut être coûteux et son intégration dans un espace déjà contraint peut être difficile.

Il est encore connu d'utiliser pour redresser le courant un composant à interrupteurs commandables, tel qu'un composant dit PFC (Power Factor Corrector) et d'implémenter des stratégies particulières pour la commande des interrupteurs. De telles stratégies peuvent conduire à un échauffement des interrupteurs et être très complexes.

Dans le domaine des hautes fréquences, on connaît par la publication « A simplified active input EMI filter of common-mode voltage cancellation for induction motor drive » un filtre actif permettant de réduire le courant de mode commun aux hautes fréquences en injectant une tension en série dans le réseau électrique.

On connaît également de la demande US 2004/0004514 un filtre actif cherchant à réduire le courant de mode commun aux hautes fréquences dans le domaine de la compatibilité électromagnétique (CEM).

Le document US6690230 présente un onduleur permettant la commande en courant d'un moteur électrique polyphasé à hautes fréquences et divulgue un filtre actif de réduction du courant de mode commun causé par le découpage PWM de l'inverter alimentant le moteur électrique.

L'invention vise à remédier aux inconvénients des solutions ci-dessus pour réduire le courant de mode commun entre le circuit électrique et la terre.

L'invention y parvient, selon l'un de ses aspects, à l'aide d'un procédé de réduction du courant de mode commun circulant entre la masse interne d'un circuit électrique et la terre, ledit circuit étant alimenté par un réseau électrique délivrant une tension alternative, procédé dans lequel :
- une tension est appliquée par le réseau électrique entre la masse interne du circuit et la terre et,
- on applique une tension additionnelle entre la masse interne du circuit et la terre à l'aide d'un composant électronique interposé entre la masse interne du circuit et la terre, cette tension additionnelle s'opposant à la tension appliquée par le réseau électrique entre la masse interne et la terre, de manière à réduire le courant de mode commun.

La tension additionnelle appliquée dans le procédé ci-dessus s'oppose à la tension appliquée par le réseau électrique entre la masse interne du circuit et la terre, la tension résultante entre le neutre du réseau électrique et la terre, mesurée aux bornes de l'impédance de la terre est ainsi réduite, d'où il ressort que le courant de mode commun est réduit.

La tension additionnelle peut être appliquée en parallèle de la capacité parasite existant entre la masse interne du circuit et la terre.

La tension additionnelle peut avoir un signe opposé à celui de la tension appliquée par le réseau entre la masse interne du circuit et la terre. La tension additionnelle peut être en valeur absolue inférieure ou égale à la valeur de ladite tension appliquée par le réseau électrique. La tension additionnelle vaut par exemple en valeur absolue au moins 50%, mieux 60%, mieux 70%, mieux 80%, mieux 90%, mieux 95% de la tension appliquée par le réseau entre la masse interne du circuit et la terre.

Plus la valeur de la tension additionnelle est proche de la valeur de la tension appliquée, plus la valeur du courant de mode commun peut être réduite. La tension additionnelle peut ainsi être une image aussi proche que possible de la tension appliquée par le réseau entre la masse interne du circuit et la terre.

La tension additionnelle peut être générée en sortie du composant électronique, ce dernier recevant en entrée le courant de mode commun circulant entre la masse interne du circuit et la terre lorsque le circuit est alimenté par le réseau électrique.

Le composant électronique peut être dépourvu de transistor à effet de champ. Le composant électronique comprend par exemple des transistors bipolaires, notamment dimensionnés pour supporter une tension Vce de l'ordre de 450 V.

Le composant électronique peut ne pas mettre en œuvre de transitions d'un état conducteur à un état bloqué.

La bande passante à 0 dB du composant électronique peut s'étendre entre 5 Hz et 1,1 kHz.

Le composant électronique peut se comporter comme un gyrateur.

L'invention peut alors mettre en œuvre un asservissement de ce courant de mode commun à une valeur prédéfinie pour ce courant. Cette valeur peut être nulle ou prendre une valeur inférieure à la valeur maximale admise par les normes. Le composant électronique peut encore être appelé « filtre actif » car il permet de filtrer le courant de mode commun à la fréquence du réseau, cette dernière étant généralement de 50 Hz ou de 60 Hz.

Le composant électronique peut être configuré pour ne filtrer que le courant de mode commun à la fréquence du réseau.

En variante, le composant électronique peut être configuré pour ne filtrer que le courant de mode commun à la fréquence du réseau et les dix premiers harmoniques de ce courant de mode commun. Dans le cas où le réseau électrique fournit un courant à 50 Hz, le composant électronique peut ainsi filtrer le courant de mode commun pour des fréquences comprises entre 50 Hz et 500 Hz.

Le courant de mode commun utilisé en entrée du composant peut être obtenu à partir des courants délivrés par le réseau électrique au circuit électrique. Lorsque le circuit électrique délivre un courant triphasé, par exemple, on peut mesurer le courant circulant dans chaque phase et additionner vectoriellement chacun de ces courants pour obtenir le courant de mode commun.

L'invention peut ainsi permettre de déterminer de façon dynamique la valeur de tension à appliquer pour réduire le courant de mode commun.

La mesure des courants ci-dessus peut être effectuée à l'aide d'un tore magnétique nanocristallin.

Lorsque l'invention est mise en œuvre pour la recharge d'une unité de stockage d'un véhicule hybride ou électrique à travers les enroulements du moteur électrique, comme décrit par exemple dans la demande WO 2010/057892 au nom de la Déposante, la mesure de courant peut avoir lieu au niveau des enroulements du moteur. En variante, la mesure de courant peut avoir lieu entre le connecteur permettant le branchement du circuit au réseau électrique et les enroulements électriques du stator du moteur.

La tension additionnelle peut être appliquée entre la masse interne du circuit et la terre en appliquant une première tension entre la masse interne du circuit et la masse interne du composant électronique et en appliquant une deuxième tension de signe opposé à celui de la première tension entre la terre et la masse interne du composant électronique, de manière à ce que la différence entre la première et la deuxième tension soit égale à la tension additionnelle. On peut ainsi utiliser deux étages amplificateurs pour réaliser la tension additionnelle. De cette façon, chaque étage amplificateur peut être réalisé à l'aide de composants moins coûteux que les composants nécessaires à la réalisation d'un étage amplificateur assurant à lui seul la génération de la tension additionnelle.

La masse interne du circuit et la masse interne du composant électronique peuvent ne pas être reliées ensemble. Elles ne sont notamment pas au même potentiel.

L'invention n'exclut cependant pas la possibilité de n'utiliser qu'un seul étage amplificateur pour générer la tension additionnelle.

Le réseau électrique peut délivrer une tension alternative dont la fréquence est de 50 Hz ou 60 Hz. Le réseau électrique délivre une tension monophasée ou polyphasée, par exemple triphasée.

Le circuit électrique peut comprendre un étage de redressement de la tension alternative délivrée par le réseau électrique, cet étage ayant une borne de sortie positive et une borne de sortie négative et la masse interne du circuit peut être branchée à la borne de sortie négative ou positive.

L'étage de redressement peut ou non être configuré pour adapter la valeur de la tension redressée aux composants en aval de cet étage. L'étage de redressement est par exemple un composant PFC, notamment un composant PFC sans pont (Bridgeless PFC).

Selon un exemple de mise en œuvre de l'invention, une unité de stockage d'énergie peut être branchée entre les bornes de sortie positive et négative de l'étage. Le procédé peut alors être mis en œuvre lorsque cette unité de stockage d'énergie est rechargée par le réseau électrique.

L'unité de stockage d'énergie est par exemple formée par une ou plusieurs batteries. Dans ce dernier cas, les batteries peuvent être montées et série et/ou en parallèle.

La tension aux bornes de l'unité de stockage d'énergie, lorsqu'elle est chargée, peut être comprise entre 150 V et 450 V. La puissance électrique absorbée par l'unité de stockage d'énergie peut être supérieure ou égale à 100W, par exemple de l'ordre de quelques kW lorsque le réseau électrique est monophasé, voire 20 kW ou plus avec un réseau triphasé.

Le circuit électrique et le châssis peuvent faire partie d'un véhicule à propulsion électrique ou hybride et le circuit électrique peut comprendre des inductances formées par les enroulements du stator d'un moteur électrique.

L'invention peut être mise en œuvre selon une application particulière dans un véhicule ayant un châssis et un circuit électrique alimenté par un réseau électrique délivrant un courant alternatif, le circuit comprenant un étage redresseur de la tension délivrée par le réseau en aval duquel est branchée la masse interne du circuit et en aval duquel est branchée une unité de stockage d'énergie telle qu'une batterie et une tension est générée entre la masse interne et le châssis s'applique alors pour réduire le courant de mode commun circulant entre la masse interne du circuit et le châssis.

Avantageusement, il n'est pas nécessaire de prévoir d'isolation galvanique entre la masse interne du circuit électrique et le réseau auquel est branché le circuit.

Grâce au composant électronique, le circuit peut être dépourvu d'isolation galvanique avec la terre, avec une capacité parasite comprise entre 0 et 350 nF, notamment comprise entre 70 nF et 350 nF.

Selon le procédé selon l'invention, la tension additionnelle n'est pas injectée en série avec les composants disposés entre le circuit et le châssis et responsables de la circulation du courant de mode commun mais cette tension est injectée en parallèle de ces composants.

L'invention a encore pour objet, selon un autre de ses aspects, un ensemble comportant :
- un circuit électrique, comportant un étage de redressement d'une tension alternative, ledit étage ayant une borne de sortie positive et une borne de sortie négative et le circuit ayant une masse interne branchée à la borne de sortie négative ou positive,
- un châssis, et
- un composant électronique relié d'une part à la masse interne du circuit et d'autre part au châssis, le composant étant configuré pour appliquer entre la masse interne du circuit et le châssis une tension permettant de réduire le courant circulant entre la masse interne et le châssis lorsque le circuit électrique est alimenté par un réseau électrique.

L'ensemble peut faire partie d'un véhicule auquel cas le châssis est le châssis du véhicule.

Le châssis peut cependant être différent d'un châssis d'un véhicule.

L'ensemble peut en variante être intégré à d'autres appareils, par exemple à un système d'alimentation d'un moteur électrique, synchrone ou asynchrone.

L'ensemble peut être intégré à tout système dont l'isolation galvanique est onéreuse, par exemple à des chargeurs de batteries absorbant une puissance électrique supérieure ou égale à 100W.

Les caractéristiques présentées ci-dessus en rapport avec le procédé peuvent également être combinées, individuellement ou non, avec l'ensemble ci-dessus.

L'invention pourra être mieux comprise à la lecture qui va suivre d'un exemple non limitatif de mise en œuvre de celle-ci et à l'examen du dessin annexé sur lequel :
- la figure 1 représente de façon schématique un ensemble au sein duquel peut être mise en œuvre l'invention,
- la figure 2 représente de façon schématique un modèle en mode commun, équivalent à l'ensemble de la figure 1,
- la figure 3 représente le schéma de la figure 2 dans lequel un exemple de composant selon l'invention est introduit,
- la figure 4 représente l'ensemble de la figure 1 dans lequel un exemple de solution selon l'invention est mis en œuvre, le composant permettant cette mise en œuvre étant représenté de façon fonctionnelle, et
- la figure 5 représente l'ensemble de la figure 1 dans lequel un exemple de solution selon l'invention est mis en œuvre, le composant permettant cette mise en œuvre étant représenté de façon structurelle.

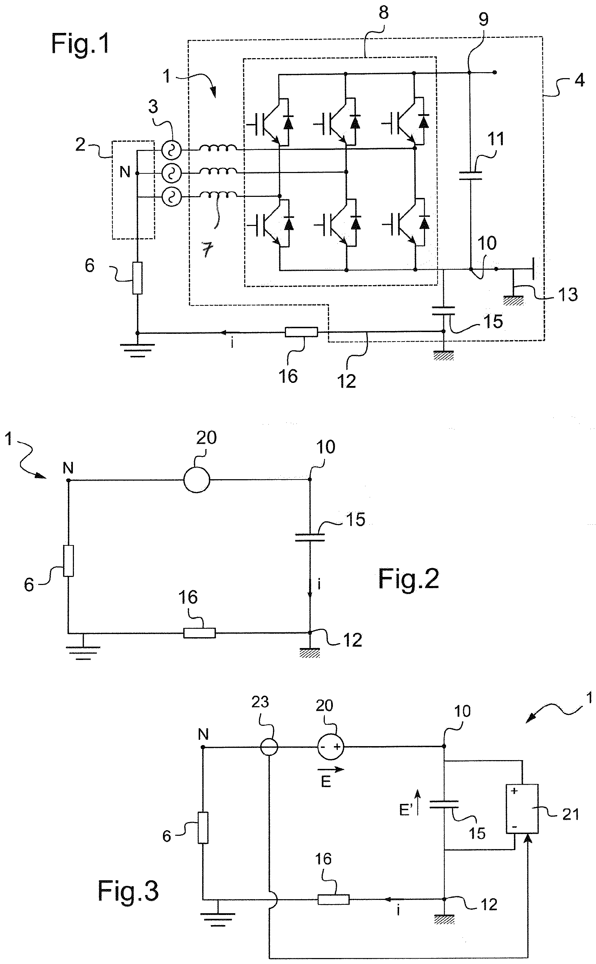

On a représenté à la figure 1 un ensemble 1 au sein duquel l'invention peut être mise en œuvre.

Cet ensemble 1 est alimenté par un réseau électrique 2 via un connecteur 3. Le réseau électrique 2 délivre une tension alternative à un circuit électrique 4 de l'ensemble 1. Dans l'exemple considéré, le réseau 2 est triphasé et délivre une tension de valeur efficace égale à 230 V. La fréquence de la tension est de 50 Hz dans l'exemple considéré. Le neutre N du réseau électrique 2 est relié à la terre et une impédance parasite 6 est interposée entre le neutre N et la terre.

Le circuit électrique 4 comprend des inductances, un étage 8 de redressement de la tension alternative délivrée par le réseau 2 et dont les bornes de sortie 9 et 10 sont parcourues par un courant continu.

L'étage de redressement 8 comprend par exemple des interrupteurs commandables tels que des transistors. L'étage 8 est par exemple un composant PFC, connu de l'homme du métier pour redresser une tension alternative, adapter la valeur de la tension redressée à la charge du circuit 4 et respecter les normes en vigueur quant à la valeur du facteur de puissance et à l'émission de courants harmoniques.

Entre les bornes 9 et 10 de sortie de l'étage 8 est montée un condensateur 11. Une unité de stockage d'énergie, par exemple une batterie, non représentée peut être branchée en parallèle de ce condensateur 11. Cette batterie absorbe une puissance électrique par exemple supérieure à 100W, par exemple de l'ordre de 3kW quand le réseau électrique 2 est monophasé, par exemple de l'ordre de 20 kW quand le réseau électrique 2 est triphasé. L'ensemble 1 comprend encore un châssis métallique 12. En cas de défaut de la mise à la terre du châssis, ce dernier est potentiellement relié à la terre via une impédance 16. Cette impédance 16 correspond, dans le cas où le châssis fait partie d'un véhicule, à la résistance corporelle d'un utilisateur du véhicule lorsque ce dernier touche d'une part la carrosserie et d'autre part le sol.

Lorsque l'ensemble 1 fait par exemple partie d'un véhicule électrique ou hybride. Les inductances 7 correspondent par exemple alors aux enroulements des phases du stator d'un moteur électrique pour la propulsion d'un moteur électrique. Les enroulements 7 peuvent alors être reliés au réseau électrique 2 selon l'enseignement de la demande WO 2010/057892.

Une capacité 15 modélise les impédances parasites et/ou les impédances réelles ajoutées pour raisons techniques, sous forme de composants électroniques de type condensateurs, notamment entre la borne 10 du circuit 4 et le châssis 12. La borne 10 du circuit 4 est ici la borne négative de sortie de l'étage redresseur 8 et le circuit électrique 4 possède une masse interne 13 qui est ici reliée à la borne 10. Du fait de l'existence de ce condensateur 15, un courant de mode commun peut circuler du circuit 4 vers le châssis 12 et en circulant dans la terre, se reboucler dans le réseau 2.

Dans le cas où le réseau électrique 2 délivre une tension alternative polyphasée et lors d'une séquence de fonctionnement des interrupteurs de l'étage 8 de la commande, la borne 10 est alternativement reliée au neutre du réseau 2 et à l'une des phases du réseau 2. Dans le cas d'un réseau 2 monophasé, la borne 10 est reliée sélectivement au neutre ou à la phase du réseau 2.

Une tension E est ainsi appliquée entre la borne 10 et le châssis 12 relié à la terre et, du fait de cette tension et du condensateur 15, du courant circule de la borne 10 vers la terre.

La partie du circuit 4 en amont de la borne 10 et le réseau 2 peuvent ainsi être assimilés à une source de tension 20 appliquant alternativement entre la borne 10 et le châssis 12:
- une tension E nulle, et
- une tension E image de celle délivrée par le réseau 2 au circuit 4.

En conséquence, un courant i circule à travers le condensateur 15 et les impédances 16 et 6 avant de se reboucler dans le réseau 2. On obtient ainsi le modèle en mode commun équivalent selon la figure 2.

On va décrire en référence à la figure 3 un exemple de mise en œuvre de l'invention.

Comme on peut le voir sur la figure 3, un composant 21 électronique est monté en parallèle du condensateur 15 pour réduire la valeur du courant de mode commun, voire même annuler ce courant. Le composant électronique 21 présente une borne reliée à la borne de sortie 10 de l'étage de redressement 8 et une borne reliée au châssis 12.

Ce composant 21 est un filtre actif configuré pour générer à une fréquence égale à celle du réseau électrique 2, cette fréquence étant dans l'exemple considéré de 50 Hz, une tension additionnelle E' s'opposant à la tension appliquée par la source de tension 20. La tension résultante appliquée aux impédances 6 et 16 est ainsi réduite, notamment annulée, de sorte que le courant parcourant ces impédances 6 et 16 est réduit, notamment annulé.

La tension additionnelle E' est appliquée par le composant électronique 21 en parallèle du condensateur 15.

Dans l'exemple considéré, le composant 21 est associé à un système de mesure 23 du courant de mode commun i parcourant le circuit 4. Dans le cas d'un réseau triphasé, ce système de mesure 23 peut mesurer le courant dans chacune des phases, par exemple à l'aide d'un tore magnétique, nanocristallin ou non, et par calcul à partir de ces courants, déterminer le courant de mode commun. Sur la base de cette information, le composant électronique 21 génère aux bornes du condensateur 15, en parallèle de ce dernier, une tension s'opposant à la tension appliquée par la source 20 entre la borne 10 et le châssis.

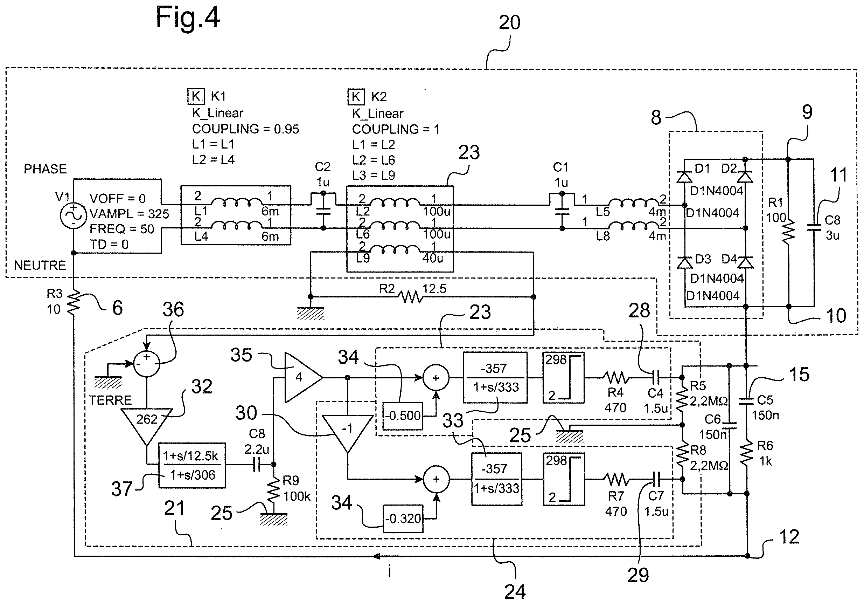

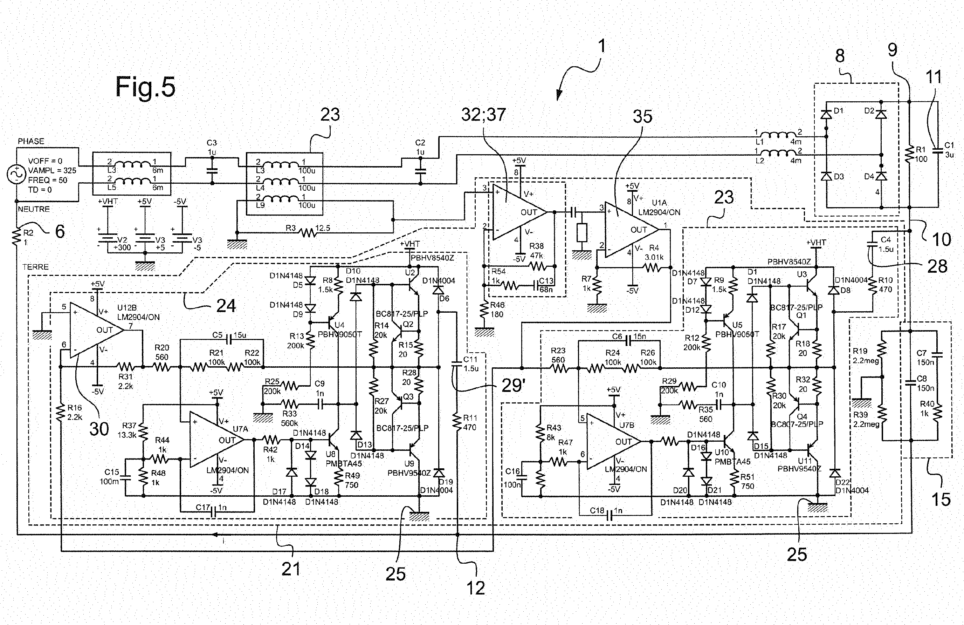

On va maintenant décrire en référence aux figures 4 et 5 de façon fonctionnelle et structurelle un exemple de composant 21.

Dans l'exemple décrit, le composant 21 comprend deux étages amplificateurs 23 et 24. Chacun de ces étages amplificateurs génère une tension à partir de la valeur de courant déterminée par le système 23. Les deux étages 23 et 24 peuvent être identiques ou non et générer ou non une même tension. La première et la deuxième tension ont par exemple toutes deux une amplitude de 300 V environ.

Dans l'exemple décrit, le premier étage 23 est relié par l'intermédiaire d'une capacité de découplage 28 à la borne de sortie 10 de l'étage de redressement 8 et le deuxième étage 24 est relié par l'intermédiaire d'une autre capacité de découplage 29 au châssis 12.

Le deuxième étage 24 comprend un gain négatif unitaire 30.

Avec les deux étages 23 et 24 représentés sur la figure 4, une première tension est appliquée entre la borne de sortie 10 et la masse interne 25 du composant électronique 21 par le premier étage 23 tandis qu'une deuxième tension de signe opposé est appliquée entre le châssis 12 et la masse interne 25 du composant électronique 21. La différence entre ces deux tensions correspond à la tension appliquée par le composant électronique 21 au condensateur 15 pour réduire le courant de mode commun.

Chaque étage amplificateur 23 ou 24 comprend un filtre passe-bas 33 de gain important et un générateur de composante continue de tension 34.

Le composant 21 comprend encore, en amont des étages 23 et 24, des gains 32 et 35, un comparateur à zéro 36 ainsi qu'un bloc 37 formant un correcteur de type PID.

La figure 5 représente un exemple de réalisation structurelle du composant 21 dont la figure 4 donne la représentation fonctionnelle. Comme on peut le voir, de nombreuses fonctions sont réalisées à l'aide d'amplificateurs opérationnels alimentés par une tension positive de 5 V et une tension négative de -5 V.

Les valeurs mentionnée sur la figure 5 donnent un exemple de dimensionnement du composant 21 pour réduire le courant de mode commun traversant le condensateur 15 pour une fréquence de 50 Hz en générant une tension additionnelle aux bornes de ce condensateur 15.

L'invention n'est pas limitée à ce qui vient d'être décrit.

Dans un autre exemple non représenté, un seul étage amplificateur peut être utilisé pour générer la tension additionnelle.

En variante encore, la tension efficace délivrée par le réseau 2 au circuit 4 a une autre valeur.

L'invention peut s'appliquer à d'autres ensembles 1 que ceux faisant partie d'un véhicule.

L'expression « comportant un » doit être comprise comme signifiant « comportant au moins un », sauf lorsque le contraire est spécifié.

## Revendications

1. Procédé de réduction du courant de mode commun (i) circulant entre la masse interne (13) d'un circuit électrique (4) et la terre, ledit circuit (4) étant alimenté par un réseau électrique (2) délivrant une tension alternative,
procédé dans lequel :
- une tension est appliquée par le réseau électrique (2) entre la masse interne (13) du circuit (4) et la terre, et
- on applique une tension additionnelle entre la masse interne (13) du circuit (4) et la terre à l'aide d'un composant électronique (21) interposé entre la masse interne (13) du circuit (4) et la terre, cette tension additionnelle s'opposant à la tension appliquée par le réseau électrique (2) entre la masse interne (13) et la terre, de manière à réduire le courant de mode commun (i) à la fréquence du réseau électrique (2).

2. Procédé selon la revendication 1, dans lequel la tension additionnelle a un signe opposé à celui de la tension appliquée par le réseau (2) entre la masse interne (13) du circuit (4) et la terre.

3. Procédé selon la revendication 1 ou 2, dans lequel la tension additionnelle est appliquée en parallèle de la capacité parasite existant entre la masse interne (13) du circuit et la terre.

4. Procédé selon l'une quelconque des revendications précédentes, dans lequel la bande passante à 0 dB du composant électronique (21) s'étend entre 5 Hz et 1,1 kHz.

5. Procédé selon l'une quelconque des revendications précédentes, dans lequel le composant électronique (21) est configuré pour ne filtrer que le courant de mode commun (i) à la fréquence du réseau électrique.

6. Procédé selon l'une quelconque des revendications 1 à 4, dans lequel le composant électronique (21) est configuré pour ne filtrer que le courant de mode commun (i) à la fréquence du réseau électrique et les dix premiers harmoniques de ce courant de mode commun (i).

7. Procédé selon l'une quelconque des revendications précédentes, dans lequel la tension additionnelle est en valeur absolue inférieure ou égale à la valeur de ladite tension appliquée par le réseau électrique (2), étant notamment égale à au moins 50%, notamment 60%, notamment 70%, notamment 80%, notamment 90%, notamment 95%, à la valeur de ladite tension appliquée par le réseau électrique (2).

8. Procédé selon l'une quelconque des revendications précédentes, dans lequel la tension additionnelle est appliquée entre la masse interne (13) du circuit (4) et la terre en appliquant une première tension entre la masse interne (13) du circuit et la masse interne (25) du composant électronique (21) et en appliquant une deuxième tension de signe opposé à celui de la première tension entre la terre et la masse interne (25) du composant électronique (21), de manière à ce que la différence entre la première et la deuxième tension soit égale à la tension additionnelle.

9. Procédé selon l'une quelconque des revendications précédentes, dans lequel le réseau électrique (2) délivre une tension alternative dont la fréquence est de 50 Hz ou 60 Hz.

10. Procédé selon l'une quelconque des revendications précédentes, dans lequel le composant électronique (21) est dépourvu de transistor à effet de champ.

11. Procédé selon l'une quelconque des revendications précédentes, dans lequel le circuit électrique (4) comprend un étage de redressement (8) de la tension alternative délivrée par le réseau électrique (2), cet étage (8) ayant une borne de sortie positive et une borne de sortie négative,
la masse interne du circuit étant branchée à l'une desdites bornes (9, 10) de sortie.

12. Procédé selon la revendication 11, dans lequel une unité de stockage d'énergie est branchée entre les bornes de sortie positive (9) et négative (10) de l'étage de redressement (8), le procédé étant mis en œuvre lors de la recharge de l'unité de stockage d'énergie.

13. Procédé selon la revendication 12, le circuit électrique (4) faisant partie d'un véhicule à propulsion hybride ou électrique.

14. Ensemble (1), comportant :
- un circuit électrique (4), comportant un étage de redressement (8) d'une tension alternative, ledit étage (8) ayant une borne de sortie positive (9) et une borne de sortie négative (10) et le circuit ayant une masse interne (13) branchée à l'une desdites bornes (9, 10) de sortie,
- un châssis (12), et
- un composant (21) électriquement relié d'une part à la masse interne (13) du circuit (4) et d'autre part au châssis (12), le composant (21) étant configuré pour, lorsque le circuit électrique (4) est alimenté par un réseau électrique (2), appliquer entre la masse interne (13) du circuit et le châssis (12) une tension s'opposant à la tension alors appliquée par le réseau électrique (2) entre la masse interne (13) et le châssis (12) de manière à réduire le courant à la fréquence du réseau circulant entre la masse interne (13) et le châssis (12).

## Patentansprüche

1. Verfahren zur Reduzierung des Gleichtaktstroms (i), der zwischen der internen Masse (13) eines elektrischen Stromkreises (4) und der Erde fließt, wobei der Stromkreis (4) von einem elektrischen Stromnetz (2) versorgt wird, das eine Wechselspannung bereitstellt,
wobei bei dem Verfahren:
- von dem elektrischen Stromnetz (2) zwischen der internen Masse (13) des Stromkreises (4) und der Erde eine Spannung angelegt wird, und
- eine zusätzliche Spannung zwischen der internen Masse (13) des Stromkreises (4) und der Erde mit Hilfe einer elektronischen Komponente (21) angelegt wird, die zwischen der internen Masse (13) des Stromkreises (4) und der Erde zwischengestellt ist, wobei diese zusätzliche Spannung der Spannung entgegenwirkt, die von dem elektrischen Stromnetz (2) zwischen der internen Masse (13) und der Erde angelegt wird, so dass der Gleichtaktstrom (i) auf die Frequenz des elektrischen Stromnetzes (2) reduziert wird.

2. Verfahren nach Anspruch 1, wobei die zusätzliche Spannung ein Vorzeichen hat, das dem der von dem Stromnetz (2) zwischen der internen Masse (13) des Stromkreises (4) und der Erde angelegten Spannung entgegengesetzt ist.

3. Verfahren nach Anspruch 1 oder 2, wobei die zusätzliche Spannung parallel zu der zwischen der internen Masse (13) des Stromkreises und der Erde vorhandenen Streukapazität angelegt wird.

4. Verfahren nach einem der vorangehenden Ansprüche, wobei sich die Bandbreite bei 0 dB der elektronischen Komponente (21) zwischen 5 Hz und 1,1 kHz erstreckt.

5. Verfahren nach einem der vorangehenden Ansprüche, wobei die elektronische Komponente (21) ausgelegt ist, um nur den Gleichtaktstrom (i) in der Frequenz des elektrischen Stromnetzes zu filtern.

6. Verfahren nach einem der Ansprüche 1 bis 4, wobei die elektronische Komponente (21) ausgelegt ist, um nur den Gleichtaktstrom (i) in der Frequenz des elektrischen Stromnetzes zu filtern und die zehn ersten Oberschwingungen dieses Gleichtaktstroms (i).

7. Verfahren nach einem der vorangehenden Ansprüche, wobei die zusätzliche Spannung in absolutem Wert kleiner oder gleich dem Wert der Spannung ist, die von dem elektrischen Stromnetz (2) angelegt wird, wobei sie insbesondere zu mindestens 50 %, insbesondere 60 %, insbesondere 70 %, insbesondere 80 %, insbesondere 90 %, insbesondere 95 % gleich dem Wert der von dem elektrischen Stromnetz (2) angelegten Spannung ist.

8. Verfahren nach einem der vorangehenden Ansprüche, wobei die zusätzliche Spannung zwischen der internen Masse (13) des Stromkreises (4) und der Erde durch Anlegen einer ersten Spannung zwischen der internen Masse (13) des Stromkreises und der internen Masse (25) der elektronischen Komponente (21) und durch Anlegen einer zweiten Spannung mit umgekehrtem Vorzeichen zu dem der ersten Spannung zwischen der Erde und der internen Masse (25) der elektronischen Komponente (21) angelegt wird, so dass die Differenz zwischen der ersten und der zweiten Spannung gleich der zusätzlichen Spannung ist.

9. Verfahren nach einem der vorangehenden Ansprüche, wobei das elektrische Stromnetz (2) eine Wechselspannung bereitstellt, deren Frequenz 50 Hz oder 60 Hz beträgt.

10. Verfahren nach einem der vorangehenden Ansprüche, wobei die elektronische Komponente (21) keinen Transistor mit Feldeffekt hat.

11. Verfahren nach einem der vorangehenden Ansprüche, wobei der elektrische Stromkreis (4) eine Gleichrichterstufe (8) der von dem elektrischen Stromnetz (2) bereitgestellten Wechselspannung umfasst, wobei diese Stufe (8) eine positive Ausgangsklemme und eine negative Ausgangsklemme hat,
wobei die interne Masse des Stromkreises an eine der Ausgangsklemmen (9, 10) angeschlossen ist.

12. Verfahren nach Anspruch 11, wobei eine Energiespeichereinheit zwischen der positiven (9) und negativen (10) Ausgangsklemme der Gleichrichterstufe (8) angeschlossen ist, wobei das Verfahren beim erneuten Aufladen der Energiespeichereinheit durchgeführt wird.

13. Verfahren nach Anspruch 12, wobei der elektrische Stromkreis (4) Teil eines Fahrzeugs mit Hybrid- oder Elektroantrieb ist.

14. Einheit (1), aufweisend:
- einen elektrischen Stromkreis (4), aufweisend eine Gleichrichterstufe (8) einer Wechselspannung, wobei die Stufe (8) eine positive Ausgangsklemme (9) und eine negative Ausgangsklemme (10) hat und der Stromkreis eine interne Masse (13) hat, die an eine der Ausgangsklemmen (9, 10) angeschlossen ist,
- ein Gestell (12), und
- eine Komponente (21), die zum einem mit der internen Masse (13) des Stromkreises (4) und zum anderen mit dem Gestell (12) elektrisch verbunden ist, wobei die Komponente (21) ausgelegt ist, um, wenn der elektrische Stromkreis (4) von einem elektrischen Stromnetz (2) versorgt wird, zwischen der internen Masse (13) des Stromkreises und dem Gestell (12) eine Spannung anzulegen, die der ansonsten von dem elektrischen Stromnetz zwischen der internen Masse (13) und dem Gestell (12) angelegten Spannung entgegenwirkt, so dass der Strom auf die Frequenz des Netzes reduziert wird, die zwischen der internen Masse (13) und dem Gestell (12) fließt.

## Claims

1. Method for reducing a common mode current (i) flowing between the internal ground (13) of an electrical circuit (4) and the earth, said circuit (4) being supplied by an electrical network (2) delivering an alternating voltage, method in which:
- a voltage is applied by the electrical network (2) between the internal ground (13) of the circuit (4) and the earth, and
- an additional voltage is applied between the internal ground (13) of the circuit (4) and the earth using an electronic component (21) interposed between the internal ground (13) of the circuit (4) and the earth, this additional voltage opposing the voltage applied by the electrical network (2) between the internal ground (13) and the earth, so as to reduce the common mode current (i) at the frequency of the electrical network (2).

2. Method according to Claim 1, in which the additional voltage has a sign opposite to that of the voltage applied by the network (2) between the internal ground (13) of the circuit (4) and the earth.

3. Method according to Claim 1 or 2, in which the additional voltage is applied in parallel to the parasitic capacitance existing between the internal ground (13) of the circuit and the earth.

4. Method according to any one of the preceding claims, in which the 0 dB bandwidth of the electronic component (21) extends between 5 Hz and 1.1 kHz.

5. Method according to any one of the preceding claims, in which the electronic component (21) is configured to only filter the common mode current (i) at the frequency of the electrical network.

6. Method according to any one of claims 1 to 4, in which the electronic component (21) is configured to only filter the common mode current (i) at the frequency of the electrical network and the first ten harmonics of this common mode current (i).

7. Method according to any one of the preceding claims, in which the additional voltage in absolute value is less than or equal to the value of said voltage applied by the electrical network (2), being notably equal to at least 50%, notably 60%, notably 70%, notably 80%, notably 90%, notably 95%, of the value of said voltage applied by the electrical network (2).

8. Method according to any one of the preceding claims, in which the additional voltage is applied between the internal ground (13) of the circuit (4) and the earth by applying a first voltage between the internal ground (13) of the circuit and the internal ground (25) of the electronic component (21) and by applying a second voltage of opposite sign to that of the first voltage between the earth and the internal ground (25) of the electronic component (21), so that the difference between the first and the second voltage is equal to the additional voltage.

9. Method according to any one of the preceding claims, in which the electrical network (2) delivers an alternating voltage whose frequency is 50 Hz or 60 Hz.

10. Method according to any one of the preceding claims, in which the electronic component (21) is without a field effect transistor.

11. Method according to any one of the preceding claims, in which the electrical circuit (4) includes a rectification stage (8) for the alternating voltage delivered by the electrical network (2), this stage (8) having a positive output terminal and a negative output terminal,
the internal ground of the circuit being connected to one of said output terminals (9, 10).

12. Method according to Claim 11, in which an energy storage unit is connected between the positive (9) and negative (10) output terminals of the rectification stage (8), the method being implemented during the recharging of the energy storage unit.

13. Method according to Claim 12, the electrical circuit (4) forming part of a hybrid or electrically driven vehicle.

14. Assembly (1), comprising :
- an electrical circuit (4), comprising a rectification stage (8) for an alternating voltage, said stage (8) having a positive output terminal (9) and a negative output terminal (10) and the circuit having an internal ground (13) connected to one of said output terminals (9, 10),
- a frame (12), and
- a component (21) electrically connected first to the internal ground (13) of the circuit (4) and secondly to the frame (12), the component (21) being configured, when the electric circuit (4) is supplied by an electrical network (2), for applying a voltage opposing the voltage applied by the electric network (2) between the internal ground (13) and the frame (12), for reducing the current at the frequency of the network flowing between the internal ground (13) and the frame (12).
